# EUROPEAN PATENT APPLICATION

(11) **EP 2 341 422 A2**
(43) Date of publication of application: **06.07.2011**
(21) Application number: 10193928.8
(22) Date of filing: 07.12.2010
(51) Int. Cl.: G06F 3/048

(54) **Mobile device and method for providing user interface based on user's preference**

(30) Priority: 30.12.2009 KR 20090133736
(71) Applicant: iriver Limited, Seoul 137-060 (KR)
(72) Inventor: Choi, Woosik, Seoul 140-030 (KR)
(74) Representative: Gulde Hengelhaupt Ziebig & Schneider

(57) **Abstract**

Provided is a mobile device for providing UI based on user's preference. The mobile device includes a display module, a control command input module, and a UI change control module. The display module displays a menu screen which includes at least one or more UIs. The control command input module receives a change window activation command which indicates activation of a UI change window for changing the UI included in the menu screen to a suitable type according to a user's preference, and a UI change command for changing the UI. The UI change control module activates the UI change window according to the change window activation command, and changes the UI according to the UI change command, which is inputted through the UI change window, to allow the UI change window to be displayed on the display module. When the UI change control module receives the change window activation command in an idle screen which displays the menu screen including the UI, the UI change control module configures the UI change window as a flash screen, and activates and displays the UI change window on the idle screen.

## Description

### CROSS-REFERENCE TO RELATED APPLICATIONS

This application claims priority to Korean Patent Application No. 10-2009-133736, filed on December 30, 2009, the disclosure of which is incorporated herein by reference in its entirety.

### TECHNICAL FIELD

The present invention relates to a mobile device and method for providing User Interface (UI) based on user's preference, and in particular, to a mobile device and method for providing UI based on user's preference, which immediately activate a UI change window for changing a UI without a complicated intermediate stage on an idle screen provided as a menu screen, and thus enable a user to simply change a UI to another UI suitable for its preference.

### BACKGROUND

A plurality of UIs, which may display and execute applications included in a mobile device, exist in the menu screen of the mobile device. The menu screen including the UIs is generally preset and provided according to the types of mobile devices. In the related art, a user may restrictively change only a portion of the preset menu screen. Herein, the change may only be made for an entire mobile device, like that where the color of the wallpaper is changed for an entire menu screen including an UI or all the fonts of texts used in the mobile device are changed. In the related art, typically, since it is impossible to respectively change UIs included in a menu screen, even when the shapes, sizes and colors of some UIs included in the menu screen are unfavorable for users' preference, the users cannot change and use the UIs. This is contrary to the requirements of consumers that reject conformity and value the users' preference.

Moreover, a menu screen change method has limitations in that it should undergo several intermediate stages although a menu screen is restrictively changed like the above-described. That is, only in a case where a user enters into the settings item of a mobile device that is separately configured in a menu screen and passes complicated detailed stages such as a screen setting item and a background item, the user may change the menu screen.

### SUMMARY

Accordingly, the present invention provides a mobile device and method for providing UI based on user's preference, which immediately activates a UI change window for changing a UI without a complicated intermediate stage on an idle screen provided as a menu screen, thereby enabling a user to conveniently change the UI.

The present invention also provides a mobile device and method for providing UI based on user's preference, which respectively changes UIs to UIs having types desired by a user on an idle screen that is provided as a menu screen, thereby providing a menu screen based on the user's preference.

The present invention also provides a mobile device and method for providing UI based on user's preference, which enlarge UIs that are frequently used by a user and reduce UIs that are not frequently used by the user because a size is changed for each UI included in a menu screen, and thus can provide a menu screen based on the use state of the user and increase the user's convenience.

According to an aspect, there is provided a mobile device for providing UI based on user's preference which includes: a display module displaying a menu screen which includes at least one or more UIs; a control command input module receiving a change window activation command which indicates activation of a UI change window for changing the UI included in the menu screen to a suitable type according to a user's preference, and a UI change command for changing the UI; and a UI change control module activating the UI change window according to the change window activation command, and changing the UI according to the UI change command, which is inputted through the UI change window, to allow the UI change window to be displayed on the display module, wherein when the UI change control module receives the change window activation command in an idle screen which displays the menu screen including the UI, the UI change control module generates and activates the UI change window to display the UI change window on the idle screen.

The UI change control module may include: an idle screen control unit controlling the idle screen; a change window control unit receiving an input from a user for changing of the UI, and performing control to display the UI change window for changing the UI on the idle screen; and a UI change unit changing the UI according to a command which is inputted through the change window.

The UI change window may provide a UI type list for changing the UI.

The UI change window may provide a color list for changing a color of the UI which is displayed on the menu screen.

The color list may include a red color control bar, a green color control bar and a blue color control bar for the user to select a desired color by mixing colors with RGB.

The UI change window may provide a size list for changing a size of the UI which is displayed on the menu screen.

The control command input module may be a touch screen for sensing touch of a user, and the change window activation command may be inputted by long pressing the UI which is included in the menu screen.

According to another aspect, there is provided a method for providing UI based on user's preference in a mobile device, which includes: displaying, by the mobile device, a menu screen which includes at least one or more UIs; receiving, by the mobile device, a change window activation command which indicates activation of a UI change window for changing the UI included in the menu screen to a suitable type according to a user's preference; and activating, by the mobile device, a UI change window according to the change window activation command, wherein in the activating of a UI change window, the UI change window is configured as a flash screen, and is activated and displayed on an idle screen which displays the menu screen including the UI.

The UI change window may include a UI type list for changing the UI. After the activating of a UI change window, the method may further include: receiving, by the mobile device, a UI change command which allows the UI displayed on the idle screen to be changed to a UI type desired by the user in the UI type list; and changing, by the mobile device, the UI according to the UI change command.

The UI change window may include a color list for changing a color of the UI which is displayed on the menu screen. After the activating of a UI change window, the method may further include: receiving, by the mobile device, a UI change command which allows the color of the UI displayed on the idle screen to be changed to a color desired by the user in the color list; and changing, by the mobile device, the UI according to the UI change command.

The UI change window may include a size list for changing a size of the UI which is displayed on the menu screen. After the activating of a UI change window, the method may further include: receiving, by the mobile device, a UI change command which allows the size of the UI displayed on the idle screen to be changed to a size desired by the user in the size list; and changing, by the mobile device, the UI according to the UI change command.

After the activating of a UI change window, the method may further include: deactivating, by the mobile device, the activated UI change window to display the menu screen on the idle screen.

In the receiving of a change window activation command, the change window activation command may be inputted by sensing the long pressing of the UI to change through a touch screen which senses touch of a user.

### BRIEF DESCRIPTION OF THE DRAWINGS_{.}

The accompanying drawings, which are included to provide a further understanding of the invention and are incorporated in and constitute a part of this specification, illustrate embodiments of the invention and together with the description serve to explain the principles of the invention.

FIG. 1 is a block diagram illustrating a mobile device for providing UI based on user's preference according to an embodiment of the present invention.

FIG. 2 is an exemplary diagram illustrating screens on which a UI change window of a mobile device for providing UI based on user's preference according to an embodiment of the present invention is executed.

FIG. 3 is an exemplary diagram illustrating a screen on which a UI change window of a mobile device for providing UI based on user's preference according to an embodiment of the present invention is executed.

FIG. 4 is a flowchart illustrating a method for providing UI based on user's preference according to an embodiment of the present invention.

### DETAILED DESCRIPTION OF EMBODIMENTS

Hereinafter, the present invention will be described in detail with reference to the accompanying drawings. Throughout the drawings and the detailed description, unless otherwise described, the same drawing reference numerals will be understood to refer to the same elements, features, and structures. The relative size and depiction of these elements may be exaggerated for clarity, illustration, and convenience. The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. Also, descriptions of well-known functions and constructions may be omitted for increased clarity and conciseness.

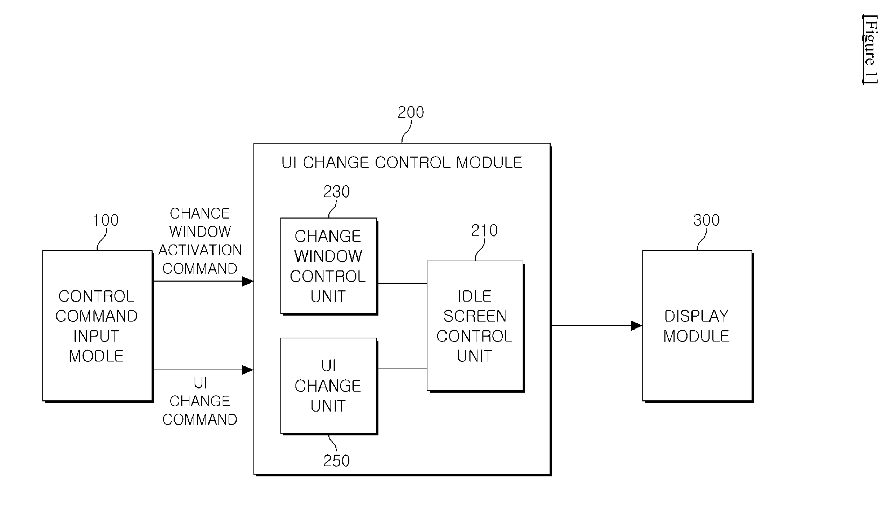

FIG. 1 is a block diagram illustrating a mobile device for providing UI based on user's preference according to an embodiment of the present invention.

Referring to FIG. 1, a mobile device for providing UI based on user's preference according to an embodiment of the present invention includes a control command input module 100, a UI change control module 200, and a display module 300.

All kinds of applications may be included in a mobile device, which may provide a menu screen, including UIs for executing the applications, as an idle screen. The display module 300 displays a menu screen including at least one or more UIs.

The control command input module 100 receives all kinds of commands. The control command input module 100 receives a change window activation command indicating the activation of a UI change window for changing a UI included in a menu screen to a suitable type according to a user's s preference, and a UI change command for changing a UI. The control command input module 100, for example, may be configured with a touch screen for sensing the touch of a user. The change window activation command may be inputted by long pressing through a touch screen. In the related art, it is impossible to respectively change UIs included in a menu screen. Also, only in a case where a user enters into the settings item of a mobile device that is separately configured in a menu screen although it changes a portion of a menu screen without changing each UI and passes complicated detailed stages such as screen setting and background, a portion of the menu screen may inconveniently be changed, and a UI having a type desired by the user is not provided. According to embodiments of the present invention, however, each UI may be changed to a type desired by a user in an idle screen provided as a menu screen. Moreover, even when changing a UI, a UI change window for immediately changing the UI is activated by merely giving a certain input to the UI in an idle screen provided as a menu screen without a complicated intermediate stage like the related art, and thus a user's convenience increases.

The UI change control module 200 activates the UI change window according to the change window activation command, and changes a UI according to the UI change command that is inputted through the UI change window, thereby allowing the UI change window to be displayed on the display module 300.

Particularly, when the UI change control module 200 receives the change window activation command in an idle screen that displays a menu screen including a UI, it activates and displays a UI change window so as to be further included in the idle screen that is displaying the menu screen.

More specifically, the VI change control module 200 may include an idle screen control unit 210, a change window control unit 230, and a UI change unit 250.

The idle screen control unit 210 controls the idle screen. The change window control unit 230 receives an input from the user for the change of a UI and performs control to display the UI change window for changing the UI on the idle screen. The UI change unit 250 changes the UI according to a command that is inputted through a change window.

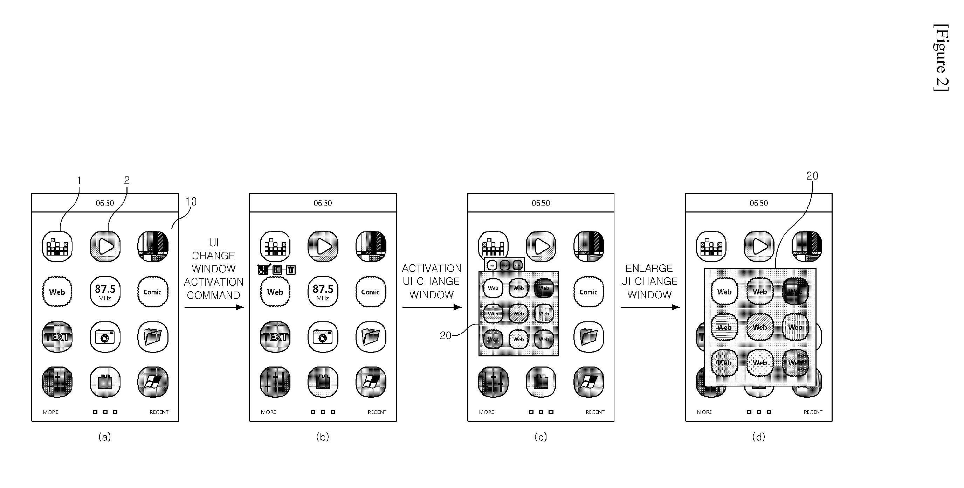

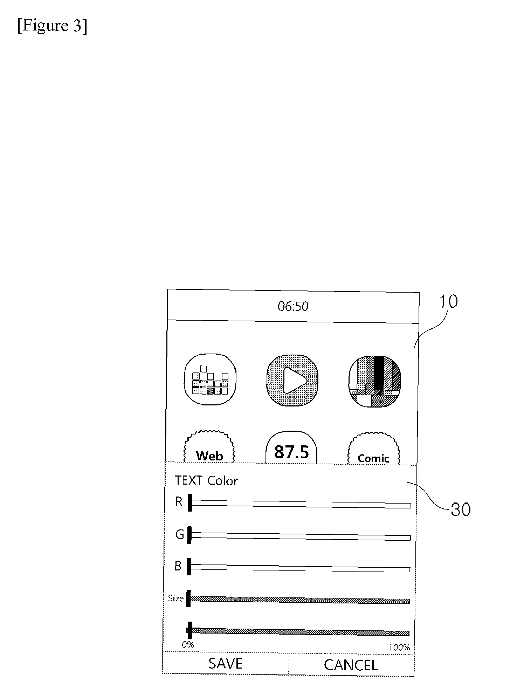

FIGS. 2 and 3 are exemplary diagrams illustrating screens on which a UI change window of a mobile device for providing UI based on user's preference according to an embodiment of the present invention is executed.

The UI change window may be relevant to a UI shape of UI type list for changing a UI, a color list for changing the color of the UI or a size list for changing the size of the UI. Herein, the UI may only be configured with a shape and also include a text.

In a portion (a) of FIG. 2, the mobile device displays an idle screen including a menu screen 10 which includes at least one or more UIs 1 and 2. When a UI change window activation command is inputted as shown in a portion (b) of FIG. 2 in a state where the idle screen is displayed, a UI change window 20 may be further included in the idle screen and displayed as shown in portions (c) and (d) of FIG. 2. The UI change window 20 has a UI size and a pop-up type at an initial stage, and then it may be increasingly enlarged and be displayed on an entire menu screen in order for the user to easily recognize it.

The UI type list may be a list that provides various forms and shapes of UI types for changing UIs. The color list may be a list that provides the kinds of colors for changing the colors of UIs. The color list, as shown in FIG. 3, may be configured with a red color control bar, a green color control bar and a blue color control bar in order for the user to select a desired color by mixing colors with RGB. The user directly mixes colors with RGB, and thus can express all kinds of colors instead of limited kinds of colors that are pre-stored in the manufacturing of the mobile device.

Moreover, the size list may be a list that provides the kinds of sizes for changing the sizes of UIs. Since the user may adjust a size to a desired size for each UI, it enlarges the size of a frequently-used UI and reduces and arranges the size of an infrequently-used UI, and thus the user's convenience can increase based on the use state of the user.

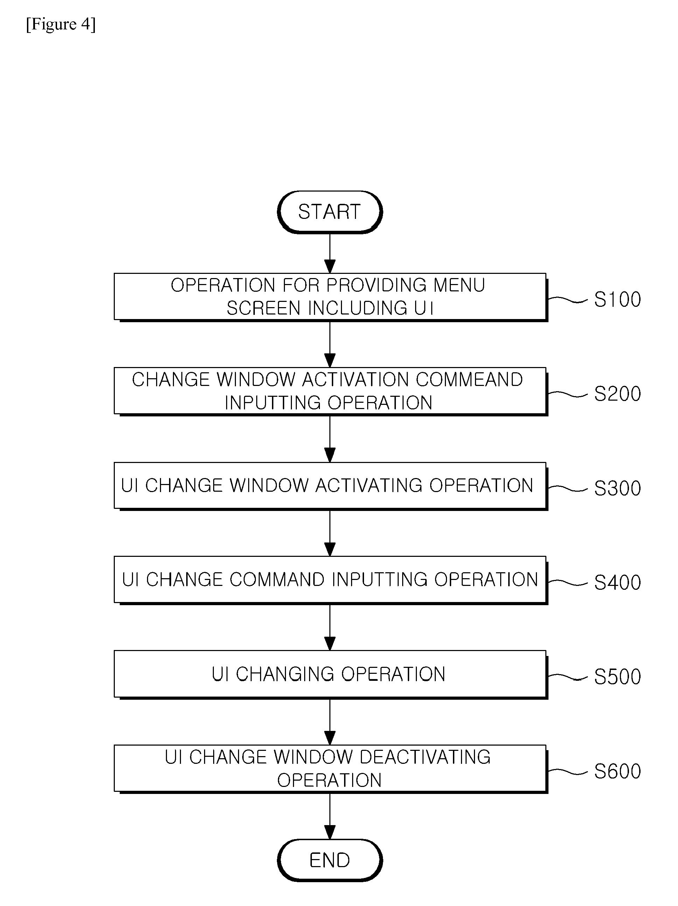

FIG. 4 illustrates a method for providing UI based on user's preference according to an embodiment of the present invention.

First, the mobile device performs a menu screen providing operation that provides a menu screen including at least one or more UIS in operation S100.

Subsequently, the mobile device performs a change window activation command inputting operation that receives a change window activation command for changing UIs included in the menu screen to a type suitable for the a user's preference in operation S200. In the change window activation command inputting operation S200, the change window activation command may be inputted by sensing the long pressing of a UI to change through a touch screen that may sense the touch of the user.

In the related art, it is impossible to respectively change UIs included in a menu screen. Also, only in a case where a user enters into the settings item of a mobile device that is separately configured in a menu screen although it changes a portion of a menu screen without changing each UI and passes complicated detailed stages such as screen setting and background, a portion of the menu screen may inconveniently be changed, and a UI having a type desired by the user is not provided. According to an embodiment of the present invention, however, each UI may be changed to a type desired by a user in an idle screen provided as a menu screen. Moreover, even when changing a UI, a UI change window for immediately changing the UI is activated by merely giving a certain input to the UI in an idle screen provided as a menu screen without a complicated intermediate stage like the related art, and thus a user's convenience increases.

In this way, when the change window activation command is inputted in the idle screen of the mobile device through the change window activation command inputting operation S200, the mobile device performs a UI change window activating operation that activates a change window for changing the UI in operation S200.

In the UI change window activating operation S300, the UI change window is configured as a flash screen, and it is overlapped on an idle screen that displays a menu screen including the UI and is displayed, thereby being activated.

At this point, the UI change window may be relevant to a UI shape of UI type list for changing the UI, a color list for changing the color of the UI or a size list for changing the size of the UI. Herein, the UI may only be configured with a shape and also include a text.

First, the following operations will be performed when the UI change window includes the UI type list for changing the UI.

After the UI change window activating operation 300, the mobile device may further perform a UI change command inputting operation S400 that receives a UI change command and a UI changing operation S500. In the UI change command inputting operation S400, the mobile device receives the UI change command that allows the UI displayed on the idle screen to be changed to a UI type desired by the user in the UI type list. In the UI changing operation S500, the mobile device changes and displays the UI according to the UI change command that is inputted through the UI change command inputting operation S400.

Next, the following operations will be performed when the UI change window includes the UI color list for changing the color of the UI.

After the UI change window activating operation 300, the mobile device may further perform a UI change command inputting operation S400 that receives a UI change command and a UI changing operation S500. In the UI change command inputting operation S400, the mobile device receives the UI change command that allows the UI displayed on the idle screen to be changed to a color desired by the user in the UI color list. In the UI changing operation S500, the mobile device changes and displays the UI according to the UI change command that is inputted through the UI change command inputting operation S400. For example, when the user selects blue in the color list, the mobile device changes the shape or text of the UI to blue and displays it.

Finally, the following operations will be performed when the UI change window includes the size list for changing the size of the UI that is displayed on the menu screen.

After the UI change window activating operation 300, the mobile device may further perform a UI change command inputting operation S400 that receives a UI change command and a UI changing operation S500. In the UI change command inputting operation S400, the mobile device receives the UI change command that allows the UI displayed on the idle screen to be changed to a size desired by the user in the size list. In the UI changing operation S500, the mobile device changes and displays the UI according to the UI change command that is inputted through the UI change command inputting operation S400.

Subsequently, after the UI changing operation S500, the mobile device may further perform a UI change window deactivating operation where it deactivates the activated UI change window that has been activated for changing the UI to display only the menu screen on the idle screen in operation S600.

The mobile device and method for providing UI based on user's preference according to embodiments of the present invention immediately activate a UI change window for changing a UI without a complicated intermediate stage on an idle screen provided as a menu screen, thereby enabling a user to conveniently change the UI.

The mobile device and method for providing UI based on user's preference according to embodiments of the present invention respectively change UIs to UIs having types desired by a user on an idle screen that is provided as a menu screen, thereby providing a menu screen based on the user's preference.

The mobile device and method for providing UI based on user's preference according to embodiments of the present invention enlarge UIs that are frequently used by a user and reduce UIs that are not frequently used by the user because a size is changed for each UI included in a menu screen, and thus can provide a menu screen based on the use state of the user and increase the user's convenience.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A mobile device for providing UI based on user's preference, the mobile device comprising:
a display module displaying a menu screen which comprises at least one or more UIs;
a control command input module receiving a change window activation command which indicates activation of a UI change window for changing the UI comprised in the menu screen to a suitable type according to a user's preference, and a UI change command for changing the UI; and
a UI change control module activating the UI change window according to the change window activation command, and changing the UI according to the UI change command, which is inputted through the UI change window, to allow the UI change window to be displayed on the display module,
wherein when the UI change control module receives the change window activation command in an idle screen which displays the menu screen comprising the UI, the UI change control module generates and activates the UI change window to display the UI change window on the idle screen.

2. The mobile device of claim 1, wherein the UI change control module comprises:
an idle screen control unit controlling the idle screen;
a change window control unit receiving an input from a user for changing of the UI, and performing control to display the UI change window for changing the UI on the idle screen; and
a UI change unit changing the UI according to a command which is inputted through the change window.

3. The mobile device of claim 1, wherein the UI change window provides a UI type list for changing the UI.

4. The mobile device of claim 1, wherein the UI change window provides a color list for changing a color of the UI which is displayed on the menu screen.

5. The mobile device of claim 4, wherein the color list comprises a red color control bar, a green color control bar and a blue color control bar for the user to select a desired color by mixing colors with RGB.

6. The mobile device of claim 1, wherein the UI change window provides a size list for changing a size of the UI which is displayed on the menu screen.

7. The mobile device of claim 1, wherein:
the control command input module is a touch screen for sensing touch of a user, and
the change window activation command is inputted by long pressing the UI which is comprised in the menu screen.

8. A method for providing UI based on user's preference in a mobile device, the method comprising:
displaying, by the mobile device, a menu screen which comprises at least one or more UIs;
receiving, by the mobile device, a change window activation command which indicates activation of a UI change window for changing the UI comprised in the menu screen to a suitable type according to a user's preference; and
activating, by the mobile device, a UI change window according to the change window activation command,
wherein in the activating of a UI change window, the UI change window is configured as a flash screen, and is activated and displayed on an idle screen which displays the menu screen comprising the UI.

9. The method of claim 8, wherein:
the UI change window comprises a UI type list for changing the UI, and
after the activating of a UI change window, the method further comprises:
receiving, by the mobile device, a UI change command which allows the UI displayed on the idle screen to be changed to a UI type desired by the user in the UI type list; and
changing, by the mobile device, the UI according to the UI change command.

10. The method of claim 8, wherein:
the UI change window comprises a color list for changing a color of the UI which is displayed on the menu screen, and
after the activating of a UI change window, the method further comprises:
receiving, by the mobile device, a UI change command which allows the color of the UI displayed on the idle screen to be changed to a color desired by the user in the color list; and
changing, by the mobile device, the UI according to the UI change command.

11. The method of claim 8, wherein:
the UI change window comprises a size list for changing a size of the UI which is displayed on the menu screen, and
after the activating of a UI change window, the method further comprises:
receiving, by the mobile device, a UI change command which allows the size of the UI displayed on the idle screen to be changed to a size desired by the user in the size list; and
changing, by the mobile device, the UI according to the UI change command.

12. The method of claim 9, wherein after the activating of a UI change window, the method further comprises: deactivating, by the mobile device, the activated UI change window to display the menu screen on the idle screen.

13. The method of claim 8, wherein in the receiving of a change window activation command, the change window activation command is inputted by sensing the long pressing of the UI to change through a touch screen which senses touch of a user.
